Europäisches Patentamt

European Patent Office

Office européen des brevets

(11) Publication number: **0 437 199 A2**

## (12) EUROPEAN PATENT APPLICATION

(21) Application number: **91100051.1**

(22) Date of filing: **02.01.91**

(51) Int. Cl.⁵: **H04N 1/32**, H04N 1/21

(30) Priority: **12.01.90 JP 3619/90**

(43) Date of publication of application:
**17.07.91 Bulletin 91/29**

(84) Designated Contracting States:
**DE FR GB IT NL**

(71) Applicant: **HITACHI, LTD.**
**6, Kanda Surugadai 4-chome**
**Chiyoda-ku, Tokyo 100(JP)**

(72) Inventor: **Kaneko, Toshiki**
**19-5-302, Ishinazakacho-1-chome**
**Hitachi-shi(JP)**
Inventor: **Sato, Yoshio**
**3-15, Hanayamacho-1-chome**
**Hitachi-shi(JP)**
Inventor: **Andoh, Hisashi**
**16-5, Kanesawacho-5-chome**
**Hitachi-shi(JP)**
Inventor: **Kita, Yoshiaki**
**3337-128, Nakane**
**Katsuta-shi(JP)**
Inventor: **Tsuboi, Nobuyoshi**
**2081, Ishigamitojuku, Tokaimura**
**Naka-gun, Ibaraki-ken(JP)**

Inventor: **Hiratsuka, Shigetoshi**
**3700-4, Akuwacho, Seya-ku**
**Yokohama-shi(JP)**
Inventor: **Sugita, Yutaka**
**12-1, Nakaarai-5-chome**
**Tokorozawa-shi(JP)**
Inventor: **Morita, Mamoru**
**29-4, Teradanawa**
**Hiratsuka-shi(JP)**
Inventor: **Hori, Yasuro**
**19-19, Higashioshima-3-chome**
**Katsuta-shi(JP)**
Inventor: **Inuzuka, Tatsuki**
**20-1, Mizukicho-2-chome**
**Hitachi-shi(JP)**
Inventor: **Okabe, Shuichi**
**Hitachi Harajuku Shataku A-408, 367,**
**Harajukucho**
**Totsuka-ku, Yokohama-shi(JP)**

(74) Representative: **Patentanwälte Beetz sen. -**
**Beetz jun. Timpe - Siegfried -**
**Schmitt-Fumian- Mayr**
**Steinsdorfstrasse 10**
**W-8000 München 22(DE)**

(54) **Communication terminal including memory.**

(57) A terminal apparatus for communicating information includes an optical disk unit (15) to be loaded with information and a communication unit (37, 38) to transmit the information from the optical disk unit in the form of signal information. This unnecessitates, for the information communication, an operation conventionally achieved to scan an original document.

EP 0 437 199 A2

## COMMUNICATION TERMINAL INCLUDING MEMORY

BACKGROUND OF THE INVENTION

Field of the Invention

The present invention relates to a communication terminal apparatus for communicating information, and in particular, to a communication terminal apparatus including a memory for storing therein information.

Description of the Related Art

Heretofore, in a communication terminal apparatus such as a facsimile terminal, received information is printed out on a print form by a printer and information to be transmitted is read from a sheet of document by a scanner.

A facsimile terminal described in the JP-A-1-26441 (1989) includes, in order to remove a problem of a communication failure during a reception of a large volume of information due to an insufficient amount of print form, a storage for temporarily storing therein information.

However, the facsimile described in the JP-A-1-26441 above necessitates an original sheet of paper for a transmission of document information in any case, and hence a scanner is employed to input the content of the document; consequently, the precision of the output data depends on the resolution of the scanner.

SUMMARY OF THE INVENTION

It is therefore an object of the present invention to provide a portable communication terminal apparatus capable of transmitting a great volume of information such as character information, images, moving pictures, and voices without using the sheet of paper of document for the transmission.

In order to achieve the object above, there is provided a communication terminal according to the present invention comprising a memory for storing therein information and communicate means for transmitting as signal information the information stored in the memory.

Information here is primarily classified into image information and code information. The communication terminal according to the present invention is capable of transmitting either one of the image and code information as well as mixed information constituted with image information and code information.

Information to be loaded in the memory is desirably beforehand generated by another information processor. Image information, code information, or mixed information of image and code information is converted into signal information for transmission to be sent via a communication line such as a telephone line or an integrated services digital network (ISDN). Favorably, the information is converted into compressed data for the communication channel; moreover, error correction information and header information for a packet operation are desirably added to the compressed data. In order to handle a great volume of data, like in a case of color image information, the memory to store therein information has desirably a large capacity.

In a transmission, the scanner is not necessarily used to input information, namely, information can be supplied directly from a large-capacity memory. Consequently, the picture quality is not influenced by the resolution of the scanner and a high-quality image can be transmitted. Particularly, this system is suitably adopted to transfer, for example, image information which is still of a great volume in the compressed state.

The memory desirably stores therein information of digital signals, not analog signals, so as to transmit information without conducting an analog-to-digital (A/D) conversion thereon.

Information to be processed may be the information read by a scanner. In this case, however, the information to be handled only includes image information and hence the picture quality is influenced by the resolution of the scanner. It is therefore desirable that the information to be loaded in the memory includes information created by another information processing system. Particularly, the character information is suitably supplied as code information; furthermore, the mixed information also containing image information is desirably produced with a high picture quality by the information processor.

It is desirable to directly transmit the signal information above in the form of digital signals. Information attained from the memory is transmitted as signal information via an interface unit. The signal information is generated as follows. Namely, the information from the memory is converted into compressed data for the communication line and then error correction information and header information for a packet operation are added to the compressed information.

Thanks to the use of a digital line such as an ISDN line, a large amount of information can be transmitted at a high speed.

Naturally, a modem as a voice signal converter may be adopted to transmit the information via a telephone line communicating analog signals.

Moreover, the memory is desirably implemented by an exchangeable medium or a replaceable medium e.g. an optical disk, an optomagnetic disk, an IC card, or a magnetic disk.

The memory includes a recording medium such as an optical disk and an information recording/reproducing unit comprising a driver for driving the medium and an optical head. It is favorable that the recording medium is not integral with the information recording/reproducing unit so as to be easily removed therefrom.

As a result, even when the recording medium becomes to be full of information stored thereon through information communications and the information is to be kept retained, the recording medium may be replaced with another medium, thereby achieving information communications without any troubles.

Among the recording medium, an optical recording medium, namely, an optical disk is desirably adopted for the memory. In a case where various kinds of data items each in a large volume are to be processed, for example, for a color image transmission or where a considerably great volume of monochrome information of several megabytes is to be communicated, for example, for communications of newspaper information, the memory capacity of an IC card or a magnetic disk is insufficient. Namely, a small-sized optical disk capable of recording thereon a large volume of information is favorably used for the optical disk unit including the driver and the optical head. Particularly, in order for the operator to erase information as soon as the information becomes unnecessary, a rewritable recording medium is suitably employed.

Naturally, the memory can be used when receiving information such that the received signal information is stored therein in the encoded form. In order to use the information later in various manners, the received information is desirably converted into a format suitable for the terminal.

The memory is favorably configured in a portable contour. When the replaceable optical disk is of a large size, there cannot be constituted a portable memory. In consequence, the size and weight of the optical disk is to be minimized to the possible extent.

For this purpose, an optical disk of a portable size is rotably installed in a protection case having a transparent portion, which is at most 2 millimeters thick. The protection case is integrally formed in the memory (to be called an optical disk-in-card memory herebelow).

The optical disk-in-card memory employed in the present invention does not include the 1.2 mm thick transparent substrate adopted as a substrate of an optical disk in the prior art. Namely, the recording, reproducing, and erasing lights are irradiated through the case having the transparent portion so as to minimize the thickness of the overall memory including the case.

The optical disk-in-card memory is characterized in that the optical disk is installed in a case of a card shape, which enhances the portability and which prevents dust and dirt from fixing onto the optical disk. This memory can store therein a large amount of information, which has been impossible for the conventional memory of the card size.

The optical disk-in-card memory has a storage capacity of at least 30 MB. The data transfer speed and the access time of the information recording/reproducing unit are 5Mb/second and 100 ms or less, respectively. In order to achieve the object above, according to the present invention, the optical disk is desirably installed in a case of a credit card size for the portability of the card memory leading to a large-capacity memory, which has been impossible for a portable memory, for example, of the conventional laptop computer. Moreover, when implementing the memory of a larger capacity, the credit card size of the card memory need only be increased.

Owing to the large capacity, the memory can be used to communicate a great amount of information such as color image, moving picture, newspaper, and direct mail information without using paper, namely, in a paperless operation. Only when necessary, the information may be read from the portable optical disk to be printed out on a print form.

Furthermore, the communication terminal apparatus according to the present invention is characterized by including communicate means for accomplishing information sending and receiving operations, a data base for recording therein the information, and information processing means for accessing the data base to process the information.

In addition, in a case where the data base itself contains a great amount of information, which exceeds the capacity of the memory disposed in the communication terminal, the data base may be arranged in another large-sized computer such that the information retrieval is conducted through a communication line thereto for acquiring the information.

Communications according to the present invention includes:

1. A communication, like the facsimile communication, in which a transmitting partner sends information to be received by a receiving partner. Namely, there exists a one-to-one correspondence between the transmitter and the receiver.

2. A communication, like the personal computer communication, in which a sending partner transmits information to a memory of a main computer such that a receiving partner accesses the memory of the main computer to receive the information; and

3. A communication in a mixed mode employing the facsimile and personal computer communications.

When configuring the communication terminal apparatus above, if the optical disk unit including the driver unit and the optical head is of a large size, the size of the communication terminal becomes greater. In this situation, a portable communication terminal or a communication terminal to be carried about in a pocket cannot be implemented. To overcome this difficulty, the size of the optical disk unit is decreased for portability, which leads to a portable communication terminal. The thickness of the entire optical disk-in card including the case thereof is set to two millimeters or less. This minimizes the distance of movement of the optical head and further decreases the thickness of the optical disk unit to 15 millimeters or less.

Since the optical disk unit is of such a portable size, the dimension of the communication terminal is decreased, thereby implementing a portable communication terminal.

As above, with the large-capacity memory having a reduced thickness, a large amount of data can be retained in the communication terminal apparatus. In consequence, a data base can be disposed in the terminal. The data base here contains various kinds of information items classified according to the kinds and analogous kinds related thereto for retrieval of the information items. A central processing unit (CPU) processing information may be used to access the data base in the memory to retrieve necessary information such that the retrieved information is processed by the CPU. After the processing is completed, the information may be transmitted as signal information. On the other hand, signal information received may be classified through the information processing to be stored as contents of the data base.

For the communication retrieval and/or information processing, a display equipment is desirably disposed in the communication terminal apparatus.

The data base in the communication terminal makes it possible to execute, in addition to the information communications, an operation to arrange communicated information for the later usages.

The information is favorably arranged in an appropriate manner in the data base.

Information items appearing in a random fashion may be appropriately classified by the information processor to be arranged in respective data bases.

The communication terminal above desirably includes a radio transmitter/receiver unit.

In addition, for information communications, the terminal may be directly connected to the communication line via a hardware wire; furthermore, the terminal may conduct a radio communication with a relay station via the radio transmitter/receiver unit. With this provision, the terminal can be implemented not only as a stationary unit operating at an installed position but also as a mobile communication terminal which is handy to be carried about or to be used in a vehicle such as a car.

In reception, a radio wave catched by the terminal is demodulated by a receiver unit and is passed via an interface unit to be written in an optical disk-in-card memory. Contents of the memory will be then read therefrom to be presented on a display.

In transmission, a file required to be transmitted is retrieved from the optical disk-in-card memory so as to present contents of the file on the display. After the displayed contents are confirmed, information of the contents is converted according to the protocol by the communication control unit. The resultant information is transferred via an interface unit to a transmitter unit to be sent to a relay station by use of a microwave.

For the information transmission and reception, the pulse code modulation (PCM) may be adopted to directly send information in a digital form from the communication terminal. Alternatively, the information may be sent in an analog form so as to be converted into a digital form after the reception thereof. In this case, if the received information is printed out on a print form while the terminal in being moved, the resultant document of the print out operation may be troublesome for the driving action or may hinder a walking passage depending on situations. Moreover, adoption of such a printer naturally increases the size of the body of the communication terminal. In consequence, in such a mobile communication terminal apparatus, it is desirable to once store the received information in the memory so as to present the information later on a display. Even when information is received while the terminal is moving, since the information is only recorded in the memory such that a file of the information is later retrieved to be presented on the display for confirmation of the received information, the information receiving operation does not cause any trouble for the terminal movement. Weight of the mobile communication terminal such as one for use in an automobile is required to be reduced to the possible extent. The communication

4

terminal including the optical disk-in-card memory according to the present invention with a large memory capacity of at least 300 MB is configured in a card contour having a thickness of about one millimeters. Moreover, the reproducing unit thereof is at most 15 millimeters thick. Consequently, the body of the terminal can be minimized to a portable size.

The information processing means may include a documentation function and an editing function. When the communication terminal is loaded with the documentation and editing functions for producing documents and drawings, contents of information to be transmitted may be generated to be temporarily stored in the memory in the terminal. The information is then converted into signal information to be thereafter transmitted. Namely, the signal information can be transmitted in the encoded form or in the mixed mode with the high picture quality kept retained.

It is favorable that these functions are disposed to be integral in the communication terminal apparatus; however, there may be configured a system including an information processing unit and a communication terminal having a similar memory unit such that a portable memory is employed to communicate information loaded therein between the information processing unit and the terminal. For example, in a system comprising a communication terminal and a personal computer disposed with an information recording/reproducing unit, information generated from the unit may be recorded in a portable memory so as to be delivered to the communication terminal.

In a case, where either one of the communication terminal and the unit to create documents or drawings is disposed in an existing system, if a missing one thereof is additionally installed, the similar operational effect can be attained in the system.

The communication terminal apparatus according to the present invention desirably includes communicate means for achieving information transmission and reception and a memory having an area for storing information to be transmitted and an area to be loaded with received information.

The communication terminal favorably comprises communicate means for achieving information transmission and reception and an optical disk unit having a transmission memory for storing information to be transmitted and a reception memory to be loaded with received information.

With the provision above, information items respectively associated with the transmission and the reception are separatedly loaded in the memory; consequently, processing procedures respectively of the information items in the transmission and reception areas may be independently carried out.

The optical disk constituting the communication memory desirably includes a directory for storing therein summarized data of information loaded thereon. The summarized data here is attained by extracting basic or key data items from the overall document information. The directory indicates a disk area containing information for respective information items stored on the disk.

The directory thus allocated in a portion of the optical disk is desirably loaded with titles and key data items sampled or extracted from the respective files to representatively indicate contents thereof and the entire data of the files. As a result, each file thus recorded can be retrieved through the data items of the directory at a high speed. The directory need not be loaded only with the key data. Namely, any data available for the information retrieval may be stored in the directory.

The key data extraction may be accomplished in a single stage or in many stages.

When recording a moving picture in a communication terminal, it is desirable to disposed a memory such that image information of the moving picture and a voice signal are recorded in an identical track. Thereafter, the voice signal information is inserted in the image information for synchronization of the image information and the voice signal, thereby storing the moving picture.

There may be disposed a fixed memory of a large size and many optical disk units for very thin optical disks so that mail information transmitted to the optical disk-in cards assigned to individual persons is transferred to the disk units.

Information received by the communication terminal is first recorded in a common optical disk-in-card memory, for example, for each holder. Thereafter, the information of each holder is separatedly stored in an optical disk-in-card memory assigned to each person. For a confidential mail, there may be disposed a provision that the reproduction thereof may be achieved only when a personal password is inputted to the terminal or only after the mail is moved onto an optical disk-in-card memory customized for the person.

In addition, when transmitting contents of a document, a memo, or the like already printed on a sheet of paper, an image sensor may be employed to read the contents of the printed sheet like in the case of the conventional facsimile equipment. It is further desirable that the image sensor is of a contact type, namely, an image sensor integrated with a linear light source including a substrate, light receiving elements arranged in a line thereon, and linear electroluminescence (EL) elements disposed as light source elements substantially in parallel with the light receiving elements.

When constructing an image sensor of the contact type, the light receiving elements and the linear light source elements are constituted with at most two substrates in an integral manner, thereby reducing the thickness of the sensor to three millimeters or less. In consequence, the total thickness including the diameter of a platen roller used to bring the document sheet into contact with the sensor substrate can be set to at most 15 millimeters. Moreover, when the sensor is combined with a memory of a very thin memory disk, it is possible to minimize the volume of each of the output and input units conventionally occupying greater portions in the facsimile apparatus of the prior art. Consequently, the thickness and the volume of the communication terminal apparatus can be considerably reduced.

The image sensor is of the contact type and is desirably configured such that on a glass substrate having a heat resistive temperature of $600^\circ$ C, there are formed thin-film semiconductor elements implementing the light receiving elements, a scanning circuit, and a read circuit. With this provision, the width of the sensor can be reduced to one fifth of that of the conventional sensor, which contributes to minimization of the size and the cost of the communication terminal.

In a communication terminal having communicate means for communicating information, an optical disk unit as a transmission/reception memory, and an image sensor for reading contents of an original document, the thickness of the communication terminal is desirably set to at most 35 millimeters and is favorably set to 30 millimeters or less.

Moreover, like in the conventional facsimile apparatus, the communication terminal may include an image reader unit for reading contents of a document sheet to be transmitted. For reducing the thickness of the communication terminal, there is favorably adopted an image sensor of a contact type in which the sensor is brought into contact with the document sheet to read the contents thereof with the original size kept unchanged.

The communication terminal apparatus according to the present invention is capable of compensating for gaps between large-capacity communication networks handling a great amount of information. That is, a large volume of information can be transported between such networks by an intervention of an optical disk-in card or an optical disk-in card memory unit. Moreover, the communication terminal is capable of communicating images, voices, and text data with another information processing apparatus, a document generating and editing system, a printer, etc. Owing to the large capacity of the memory, a large volume of information associated with a color image, a mobile picture, a newspaper, a direct mail, and the like can be communicated without using paper, namely, in a paperless operation. Only when requested, the necessary information may be printed out on a sheet of paper. Thanks to the reduced thickness of the large-capacity memory, the terminal apparatus can be adopted as a portable terminal for personal uses.

In addition, since the optical disk-in card is portable, when a similar memory system is disposed in a personal computer system or a word processor system, an original document produced by the system may be recorded on the optical disk-in card. The card is then installed in the facsimile apparatus such that information of a file on the card may be directly transmitted without using a scanner to read the contents of the document sheet of paper. This leads to an advantage that a picture of a high image quality can be transmitted.

Furthermore, the communication terminal apparatus according to the present invention includes a facsimile unit, a telephone set, a personal computer, and an optical disk unit to configure an integral unit. Namely, these constituent components are not connected, for example, via a local area network (LAN). Moreover, the terminal apparatus is structured in a portable size for a lap-top use.

Furthermore, according to the present invention, there is implemented a communication terminal apparatus for communicating various kinds of information.

In addition, since the communication terminal apparatus according to the present invention includes a small-sized, light-weight portable memory, there can be realized an information system in which the communication terminal is connected to another information processing apparatus.

Furthermore, the communication terminal apparatus according to the present invention transmits code information via a large-capacity memory and hence unnecessitates the operation handling the sheet of document paper. This increases the precision of information to be transmitted and enables the information transmission to be achieved in a time-shared fashion.

Moreover, the communication terminal apparatus according to the present invention is of a small size and of a light weight and is therefore portable. This allows each user of the terminal apparatus to move about with the own personal information kept at hand.

BRIEF DESCRIPTION OF THE DRAWINGS

These and other objects and advantages of the present invention will become apparent by reference to the following description and accompanying drawings wherein:

Fig. 1 is a schematic diagram showing an appearance of an apparatus in which a communication terminal is applied to a facsimile unit according to the present invention;

Fig. 2 is a cross-sectional view of the apparatus of Fig. 1;

Fig. 3 is a block diagram showing the configuration of the apparatus of Fig. 1;

Fig. 4 is a plan view of an optical disk-in-card;

Fig. 5 is a plan view of an optical disk installed in the card of Fig. 4;

Fig. 6 is a conceptual diagram showing an optical disk-in-card memory unit;

Fig. 7 is a cross-sectional view of a light irradiating unit in a state where the optical disk-in-card is mounted onto an information recording/reproducing unit of Fig. 6;

Fig. 8 is a plan view of an optical system constituting the information recording/reproducing unit of Fig. 6;

Fig. 9 is a cross-sectional view of the optical system shown in Fig. 8;

Fig. 10 is a schematic diagram showing an appearance of a mobile communication terminal using a radio system;

Fig. 11 is a block diagram illustratively showing an application example of the mobile communication terminal;

Fig. 12 is a schematic diagram showing an appearance of a small-sized mobile communication terminal;

Fig. 13 is a diagram showing an appearance of a mobile telephone communication terminal of a very small size;

Fig. 14 is a block diagram showing the configuration of a multi-media workstation;

Fig. 15 is a schematic block diagram showing the constitution of a so-called image-phone;

Fig. 16 is a diagram showing the configuration of a system employing image-phones;

Fig. 17 is a cross-sectional diagram of a paperless facsimile apparatus;

Fig. 18 is a block diagram showing the configuration of the paperless facsimile apparatus;

Fig. 19 is a cross-sectional view of an image sensor of a contact type;

Fig. 20 is a cross-sectional view of an image sensor of a unified circuit type; and

Fig. 21 is a diagram showing an equivalent circuit of the image sensor.

## DESCRIPTION OF THE PREFERRED EMBODIMENTS

Referring now to the drawings, a description will be given of embodiments according to the present invention.

### Embodiment 1

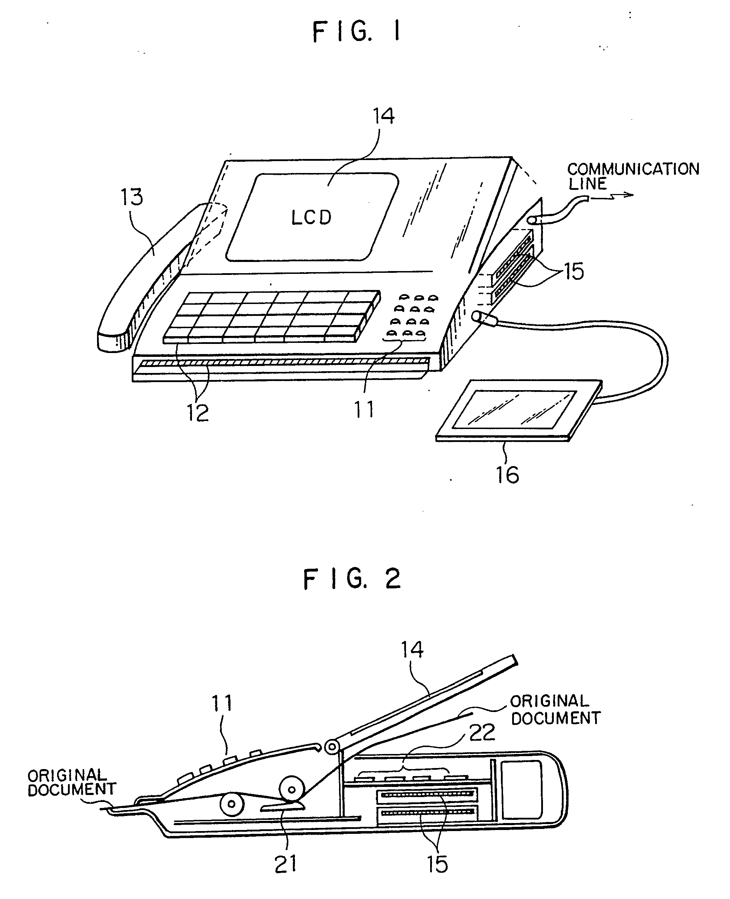

Fig. 1 schematically shows an appearance of an apparatus in which the communication terminal is applied to a facsimile unit according to the present invention. The configuration of Fig. 1 includes pushbutton phone or push-phone input keys 11, abbreviated dial and a alphabetic letter input keys 12, a telephone handset 13, a display 14, an optical disk-in-card memory 15, and a manual tablet 16 as an image input unit.

The display 14 is desirably implemented by a flat display such as a liquid crystal display or an electroluminescent display, thereby further decreasing the thickness of the terminal.

Fig. 2 shows a cross section of the apparatus of Fig. 1. The constitution of Fig. 2 includes a contact-type sensor 21, a circuit unit 22 constituted with a main control unit, a communication control unit, an encoding/decoding unit, and an interface unit; push-phone input keys 11, a display 14, and an optical disk-in-card memory 15.

When transmitting information of an original document, contents thereof is inputted by the contact sensor 21 and/or the tablet 16 so as to be written in the optical disk-in-card memory 15, thereby sending the information from the memory 15 to a communication line.

Desirably, the optical disk-in-card is loaded with information beforehand produced by a word processor or the like such that the stored information is sent via the communication terminal according to the present invention. As a result, a scanner such as the contact sensor need not be employed for the information transmission and hence the size and the weight of the communication terminal can be minimized. Moreover, since information created by a word processor or the like can be directly transmitted in the form of code signals, the information need not be printed on a sheet of paper. In addition, the information is not influenced by the resolution of the scanner and hence highly precise information can be transmitted.

On the other hand, when receiving information, the received information is stored in the optical disk memory 15 and then the display 14 presents a list of received information. When a file is to be accessed, the operator need only specify the file from the operator's console, for example, by use of alphabetic letter input keys 11. File information resultantly transferred from the optical disk-in card memory 15 is presented on the display 14.

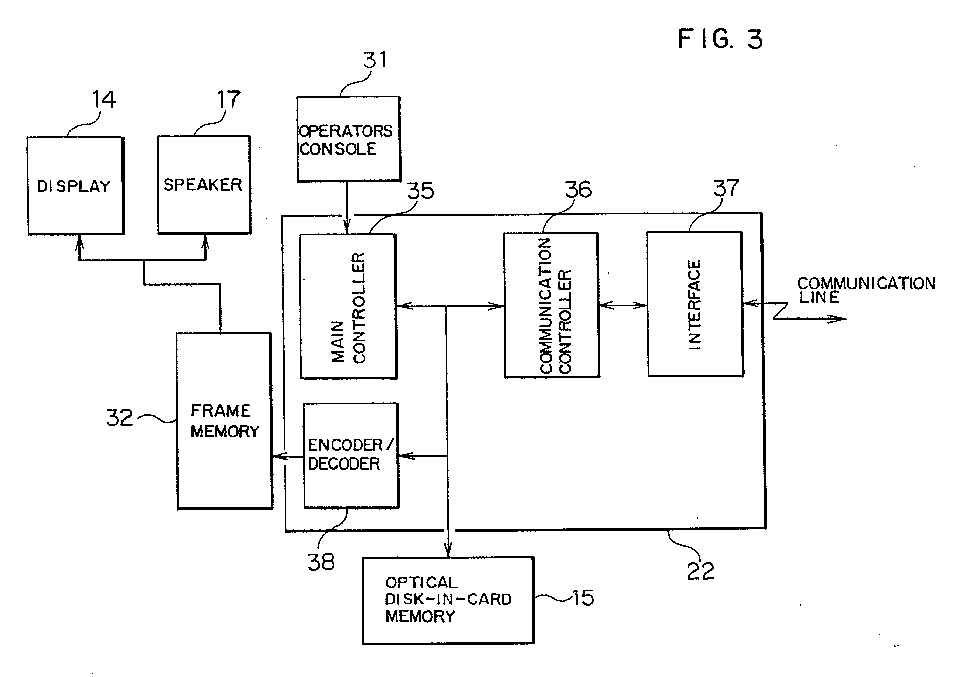

Fig. 3 is a block diagram showing the configuration of the apparatus of Fig. 1.

In an information receiving operation, information inputted via a communication line to be received by a interface unit 37 is fed therefrom to a communication control unit 36. The information is received in the form of image signals, encoded digital signals of a text or the like, mixed signals of the signals above, or audio or voice signals.

When the communication line is implemented by a telephone line, the interface unit 37 includes a network controller for the telephone line.

In a case where the communication line is an integrated services digital network (ISDN), the interface unit 37 is implemented by an ISDN interface. When the communication terminal apparatus according to the present invention is employed in the ISDN environment, through communication lines developed wordwise, a great amount of information may possibly be communicated at a low cost and at a high speed for later uses thereof.

The information received by the communication control unit 36 is then transferred and stored in the optical disk-in-card memory 15 under control of the main control unit 35.

When acquiring the information recorded in the optical disk-in-card memory 15, the operator supplies an appropriate instruction from the operator's console 31, for example, from a keyboard to the main control unit 35 such that the information is decoded by an encoding/decoding unit 38 to be temporarily loaded in a frame memory 32. Thereafter, image information is outputted to a display unit 14 and voice information is supplied to a speaker unit 17.

On the other hand, when transmitting information, an optical disk-in-card beforehand loaded with information is installed in the optical disk-in-card memory 15. Confirming the information presented on the display 14, the operator supplies a proper instruction to the main control unit 35 to transfer the information from the memory 15 to the communication control unit 36.

The information is then converted into a format according to the protocol employed for the communicating partner.

For example, in a case of a G3 facsimile system communicating with a partner through a telephone line, the information is converted from the digital form into an analog form by a modem, which sends the resultant analog signals via the interface unit 37 to the telephone line.

The communication terminal apparatus desirably includes a function for discriminating image information from code information.

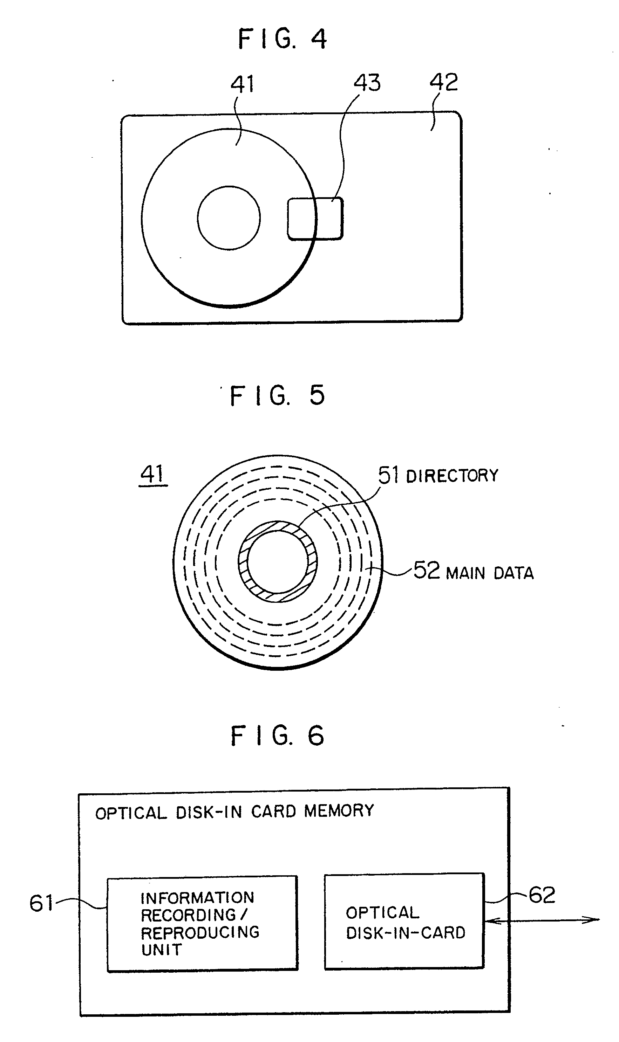

Fig. 4 is a plan view of an optical disk-in-card adopted in the optical disk-in-card memory 15 of Fig. 1.

The structure of Fig. 4 includes an optical disk 41, a case 42 in which the optical disk 41 is to be loaded, and a window 43 disposed to irradiate a light therethrough onto the optical disk 41.

In the optical disk-in-card memory 15 according to the present invention, the optical disk 41 is rotably mounted in the case 42 such that a light is irradiated onto the disk 41 through the window 43 disposed in the case 42, thereby recording information on he optical disk 41.

The window 43 is desirably manufactured with a transparent material so that the light is irradiated through the transparent substance onto the optical disk 41. With this provision, the thickness of the substrate utilized for the optical disk 41 can be reduced to 1.2 millimeters or less, which resultantly minimizes the thickness of the overall optical disk unit including the case 42.

Moreover, the optical disk-in-card according to the present invention is constituted in a size of a credit card with a reduced thickness, which implements a portable, large-capacity card.

The optical disk-in-card has a large capacity of at least 30 MB and can be used to transfer information at a high speed. Namely, the card is also capable of communicating color and moving pictures represented with a great amount of information.

Furthermore, the optical disk-in-card is available for communicating mixed information of images and characters, for example, information of a newspaper and a catalog.

By using the portable optical disk-in-card, information created by an apparatus other than the communication terminal of the present invention may be transmitted without necessitating the operation to print out the information on a print form. Furthermore, received information may be processed by another apparatus to print out a necessary portion thereof on a sheet of paper.

In addition, if a laser emitting a light of a short wavelength is adopted to record information in the card, the recording capacity of optical disk-in-card may possibly be increased to 100 MB or more.

Fig. 5 shows an optical disk employed in the optical disk-in-card of Fig. 4.

The configuration of Fig. 5 includes a directory section 51 and a main data section 52.

Information passed from the communication control unit 36 is recorded in the main data section 52 of the optical disk 41. In association with the recording operation, in order to store an outline or representative information of the received information in the directory section 51 disposed in a portion of the optical disk 41, the contents of information are sampled to attain basic or key data, keywords, index data, titles, etc. The sampled data is recorded in the directory section 51 in a separate manner as compared with the received information or data. With the directory thus created, the system can retrieve the main data at a high speed.

In a case where these information items are separately stored in the directory section 51 and the main data section 52, the basic or key data recorded in the directory section 51 is first processed into a composite form to be presented on the display. Thereafter, a necessary file is retrieved so as to resultantly display the information written in the main data section 52.

The basic data and the like recorded in the directory section 51 may be data items indicating names of the respective files recorded in the main data section 52. These data items may be registered as file names to the optical disk 41 in advance.

With the provision of the directory section 51, objective information can be retrieved at a high speed. Moreover, unnecessary information of documents need not be directly printed out on a sheet of paper, which reduces the volume of paper to be used in the system.

The information retrieval adopting the directory above is controlled by the main controller 35 of Fig. 3.

Furthermore, in order to automatically select keywords and the like and to record the keywords in the directory section 51, the terminal apparatus favorably includes a processing step to recognize characters in the image information.

In addition, the information recorded in the main data section 52 of the optical disk is desirably classified into portions of necessary information and unnecessary information so that new information is written in a disk portion containing the unnecessary information. This may prevent a saturation of the recording capacity of the disk from occurring in a system operation. Such a recording area control is also achieved by the main controller 35 of Fig. 3.

When recording information of a moving picture, there is favorably employed a moving picture recording method in which image information and voice or audio information are stored on an identical track such that the voice information is inserted in the image information to establish synchronization therebetween.

Fig. 6 conceptually shows the constitution of the optical disk-in-card memory 15.

The configuration of this figure includes an optical disk-in-card 62 and an information recording and reproducing unit 61 for accomplishing information recording, erasing, and reproducing operations on the optical disk-in-card 62.

Table 1 shows specifications of the memory unit 15.

## Table 1

| Optical disk size | Credit card size |
|---|---|
| | 1.9 inches |
| | (recording area: 38 to 48 mm) |
| Recording capacity | 30 MB (wavelength: 830 nm) |
| Data transfer | |
| Speed | 5 Mb/sec; 3600 rpm |
| Access time | 100 ms |
| Drive size | 15 mm or less |

As can be seen from Table 1, when a case formed in a credit card shape is used, the size and the recording capacity of the optical disk are about 1.9 inches and 30 MB, respectively. Moreover, when the wavelength of 830 nm currently used in the present stage of art is reduced to half thereof, the recording capacity is increased to 120 MB or more, namely, at least four times the original capacity. Furthermore, the data transfer speed of the disk-in-card memory 15 is 5 Mb/sec at a disk rotation speed of 3600 rotations per minute (rpm). The access time is minimized to 100 milliseconds enabling a high-speed data transfer.

The information recording/reproducing apparatus in accordance with the present invention comprises an optical head for achieving at least either one of operations to record information on an optical disk, to reproduce information recorded thereon, and to erase the information, rotate means such as a motor for rotating the optical disk, and a driver circuit for controlling operations of the optical head and the rotate means, respectively.

The apparatus above favorably includes a processor for supplying the driver circuit with instructions, input means for inputting information to the processor, and output means for outputting information from the processor.

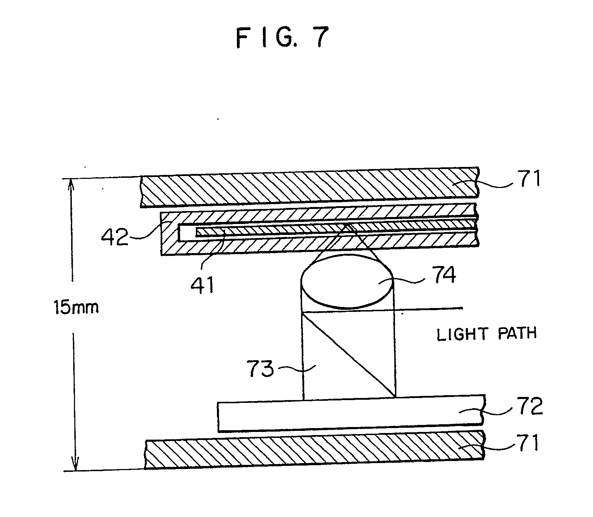

Fig. 7 shows a cross section of an optical system of the information recording and reproducing apparatus of Fig. 6 with an optical disk-in-card installed therein.

The structure of Fig. 7 comprises an optical disk 41, a case 42 thereof, a driver case 71, a substrate 72, and a prism 73 and an objective 74 which are formed on the substrate 72.

When recording information on the optical disk 41, a light is collected by the objective 74 to be irradiated through a transparent portion of the case 42 onto the optical disk 41.

With this provision, the total thickness of the optical disk-in-card including the case 42 can be reduced to two millimeters or less.

In this case, when the diameter of the light beam incident to the prism 73 is minimized and the fluctuation of the rotary movement of the surface of the optical disk 41 in the rotation thereof is reduced, the driver size or thickness may be decreased to 15 millimeters or less.

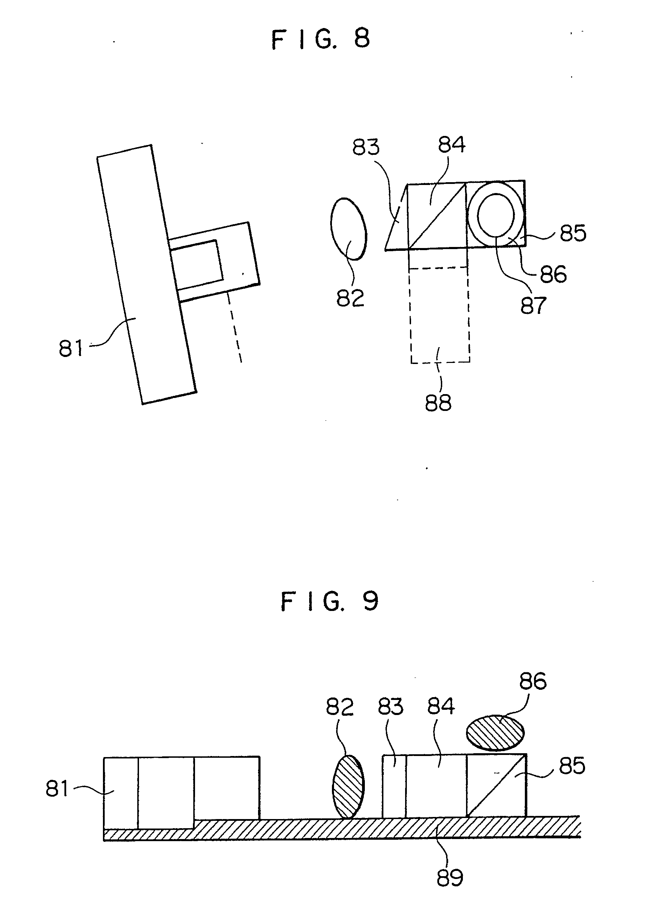

Figs. 8 and 9 respectively are a plan view and a cross-sectional view of an optical system used in an information recording/reproducing apparatus constituting the optical disk-in-card memory unit 15.

The constructions of these figures comprises a semiconductor laser 81, a collimation lens 82, a polarizing prism 83, a shaping prism 84, a mirror 85, an objective 86 having an effective diameter 87, a photosensor 88, and a substrate 89 on which the constituent components above are arranged.

With the constitution of the optical system of Figs. 8 and 9, the size of the optical head can be minimized, which leads to reduction of the contour of the information recording/reproducing apparatus.

According to this embodiment, two optical disk units (optical disk-in-card memory units) are employed; however, the apparatus may include only one optical disk unit to develop the operation above.

When two optical disk units are adopted, one of the units may be used for a reception memory and the other one thereof may be employed for a transmission memory, namely, only for expanding the memory capacity.

Moreover, when a plurality of memory units are disposed, information associated with a person may be selected from a large volume of received information to be transferred to another optical disk unit such that the original information is erased from the memory units. As a result, there can be configured a facsimile mail system in which information received by a communication terminal is classified into individual information items to be stored in respective optical disk-in-cards.

Furthermore, when only one optical disk unit is utilized, a transmission area and a reception area are favorably disposed in the optical disk unit.

In addition, the communication terminal according to the present invention may also be employed as a facsimile phone apparatus in which operators may conduct a telephone conversation while communicating images and documents in a facsimile system. In the configuration of Fig. 3, received information is stored via the communication control unit 36 in the optical disk-in-card memory 15. In concurrence therewith, the encoded information is decoded to be provisionally stored in the frame memory 32 so as to be presented therefrom on the display 14. This system includes a document processing unit, namely, a documentation and editing section. In addition, input devices such as a transparent tablet and a keyboard may be used to add and to delete information to and from the received information. The operator desirably achieves the above operations while confirming the information presented in a visualized form on the display 14. The modified information is stored in the frame memory 32 to be encoded by the encoder/decoder unit 38. The encoded information is again loaded in the optical disk-in-card memory 15 to be transmitted through the interface 37, for example, associated with the ISDN or through a network controller. Information of a conversation is encoded by a voice input unit (not shown) to be processed in parallel with the communication of image information. When using a digital line adaptive to the mixed more, the code, image, and voice signals can be simultaneously communicated.

Embodiment 2

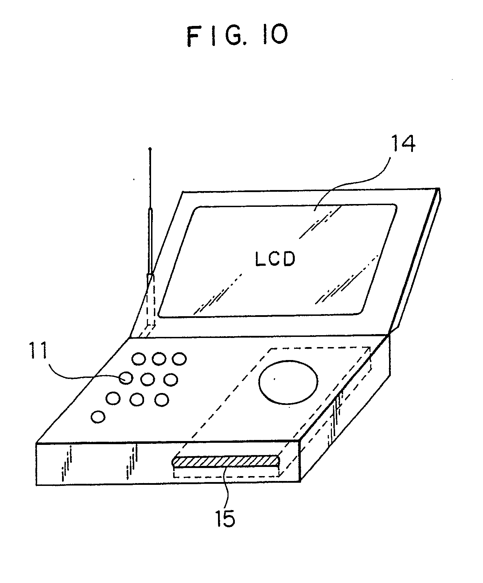

Fig. 10 shows an appearance of a mobile communication terminal adopting a radio communication system.

This terminal comprises an optical disk-in-card memory 15 as a large-capacity memory, a pushbutton-phone input unit 11 for inputting information, and a flat display 14 such as a liquid crystal display for displaying information thereon. Moreover, a liquid crystal display in which a manual input by a pen or the like is possible may be used for the input unit. In put information may be supplied from a keyboard. Since the optical disk-in-card memory 15 having the greatest thickness among the components is at most 15 millimeters thick, the thickness of the communication terminal may be set to about 20 millimeters.

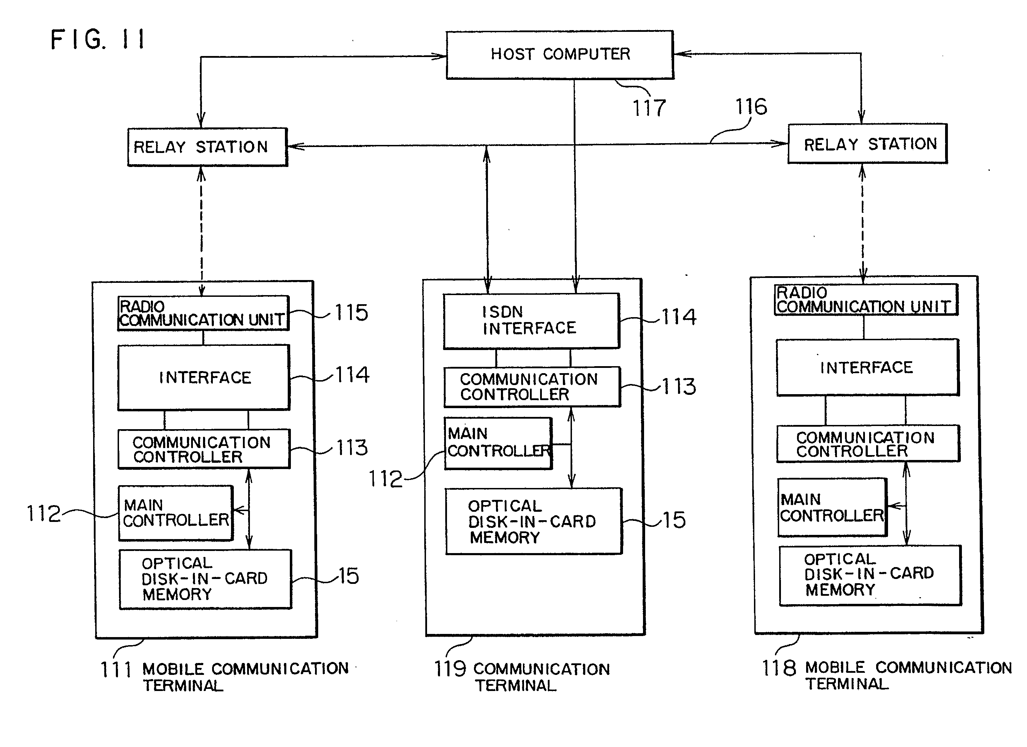

Fig. 11 is a block diagram showing an example of a system including the mobile communication terminals. In this system, information retrieved under control of a main controller 112 from a data base in an optical disk-in-card memory 15 undergoes a protocol conversion in a communication controller 113. The converted information is translated into signal information by an interface 114 to be passed via a radio communication unit 115, which transmits the signal information via a relay station and an ISDN line or a telephone line 116 to another communication terminal 119 or another mobile communication terminal 118.

Alternatively, when a data base of a larger capacity is required, an access is made to a host computer 117, like in the case of a personal computer communication, so as to retrieve necessary information from a data base belonging to the host computer 117. When the retrieved information is received, the terminal may store the information in the optical disk-in-card memory 15.

Moreover, the system may include only the communication terminals 119 for a digital line such as the ISDN or a telephone line. In a case of the digital network line, the terminals are connected to the host computer 117 in a personal computer network. In other cases, the connection is established via a network controller. When transmitting information from the optical disk-in-card memory 15 to a particular person, the main controller 112 is instructed to transfer the information from the memory 15. The communication control unit 113 converts the information according to a protcol adaptive to a communication terminal of the transmission destination and then transmits the converted information via the ISDN interface 114 or the network controller.

On the other hand, when transmitting information to plural persons or to many unspecified persons, it may be possible to convert the information adaptive to the host computer 117 so as to be sent therefrom to objective terminals. That is, as a result of a single information transmission operation from the terminal to the host computer, the information can be sent to a plurality of terminals at the same time. Depending on the protocol, the main controller 112 can select either one the cases above.

However, in order for a user to access a computer network, the user is required to participate in a society of the computer network, namely, to become a member thereof. Moreover, information cannot be sent to any person other than the members. When sending information to many destination terminals via telephone lines, telephone numbers of the terminals need only be stored in a memory to conduct a sequential broadcasting in which files retrieved from the optical disk-in-card memory 15 are sequentially transmitted to the partner terminals associated with the telephone numbers. When a telephone line of a partner is busy, the transmission is carried out to other terminals. Thereafter, the pertinent file is again read from the optical disk-in-card memory 15 to be sent thereto. When the communication controller 113 is provided with two kinds of protocol conversion procedures to connect the pertinent terminal to the communication lines of the communication terminals and the host computer 117, a highly efficient information communication can be achieved at a low cost.

Moreover, thanks to the portability and the large capacity of the communication terminal, the user may bring about the communication terminal such that the terminal is connected to a network for a public telephone line associated with the ISDN to conduct information communication.

In accordance with the present invention, the communication terminal employs a portable optical disk-in-card with a thickness of about one millimeters. Owing to the highly portable recording medium, there is developed a function to compensate for gaps between information networks. Namely, even in a case where there is not disposed a communication network between the communication terminal and a documentation generating and editing apparatus such as a word processor, a personal computer, or a workstation, information may be communicated therebetween as follows when an apparatus for achieving information recording and reproducing operation on the optical disk-in-card memory 15 is disposed in the document generating and editing apparatus and the information recording is conducted in an identical format. In this situation, a great amount of information of documents and images thus generated and edited by the apparatus may be transferred via the optical disk-in-card to the optical disk-in-card memory 15 of the communication terminal, thereby transmitting the great volume of information through a communication network to the partner apparatus. Since the scanner is unnecessitated, the file information can be directly transmitted and hence high-quality information may possibly be communicated.

Although there may be configured a communication terminal apparatus having a document generating and editing function, the size and the cost thereof are increased. To overcome this difficulty, either one of the document generating and editing apparatus and the communication terminal apparatus is installed as a shared unit and the other one thereof is employed for personal uses so that the function above is accomplished via an optical disk-in-card memory 15. The recording unit may be disposed in the facsimile equipment; however, when necessary, it may also be possible that the optical disk-in-card or the optical disk-in-card memory (optical disk unit) is detached from the facsimile unit so as to be installed in the personal computer or the wordprocessor, thereby printing out information on a print form by a printer thereof.

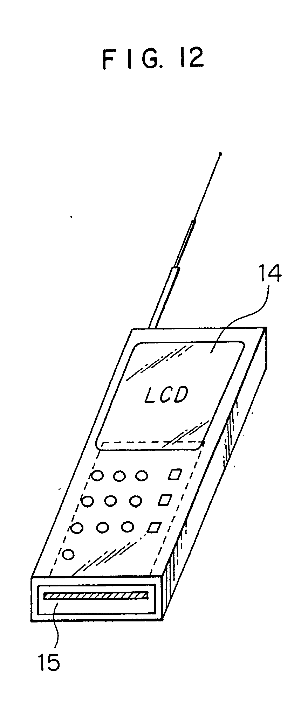

Fig. 12 shows an appearance of a small-sized mobile communication terminal. In order to reduce the volume of the terminal, the width thereof is set to be similar to that of the optical disk-in-card memory 15. As a result, the volume becomes to be similar to that of a conventional cellular radio communication unit. With this provision, the very compact mobile terminal can be used to retrieve information from a data base while visually checking the information on the flat display 14 such as a liquid crystal display.

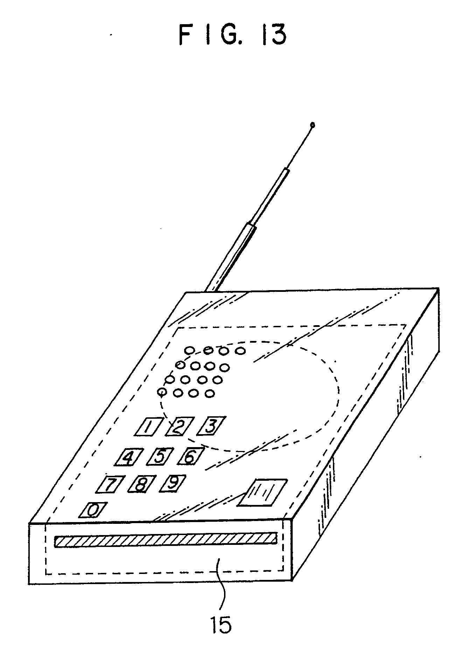

Fig. 13 shows an appearance of telephone communication terminal of a very small size having a volume similar to the volume of the optical disk-in-card memory 15. Since the body of the terminal does not include a flat display, information cannot be retrieved from the data base; however, a large amount of data may be received. Although this terminal has only the necessary function for a telephone conversation and a data reception, the terminal is advantageously structured in a small size. Contents of data received by the terminal may be presented on a decicated display for confirmation thereof.

Embodiment 3

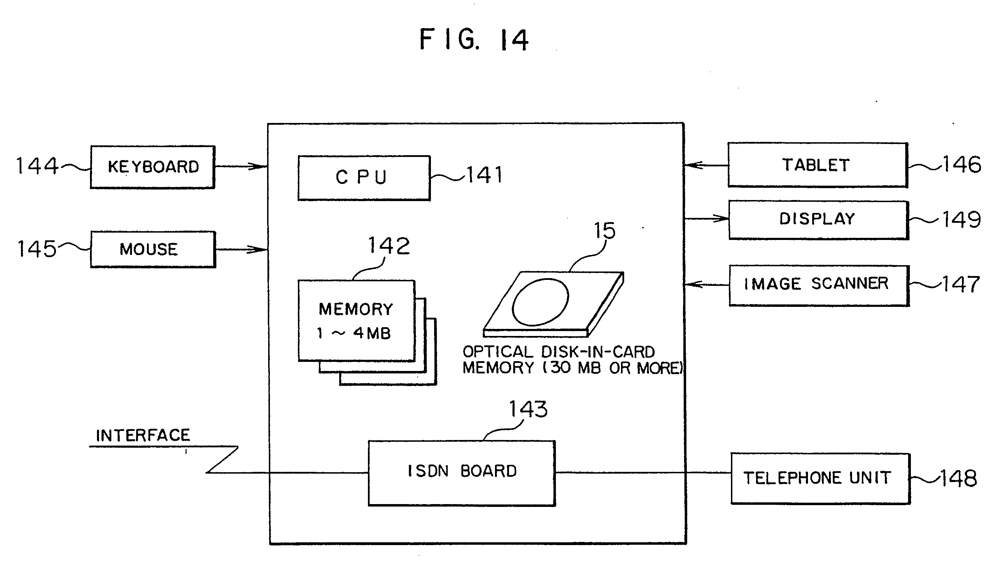

Fig. 14 shows the constitution of a multi-media workstation having a communication function. The main body of the workstation includes a central processing unit (CPU) 141, an RAM/ROM memory 142 having a capacity of 1 MB to 4 MB, a portable optical disk-in-card memory 15 as an external memory having a capacity of 30 MB or more, and an ISDN board 143 as a communication section comprising a communication controller, a main controller, and an encoder/decoder.

A peripheral section comprises an input section including a keyboard 144, a mouse 145, an image scanner 147, and a tablet 146 as a manual input unit; a flat display 149 for visualized information, and a telephone unit 148.

The workstation naturally having various information processing functions, document generating functions, etc. may be employed in an operation in which documents and drawings are generated and images are supplied from the image scanner 147 such that while achieving mixed communications of image and code information, a telephone conversation is conducted to communicate information associated with the operation, thereby implementing a highly developed electronic interlocution system. That is, materials related to an interlocution are first transferred to the communication partner to present identical interlocution information on the display screens related to the conversation partners. Moreover, when an item of the materials presented on the display 149 is specified by a finger or mouse, the pertinent item is denoted by an indication mark such as an arrow mark. The workstation may be provided with a telepointing function and a telewriting function in which a memo may be written in the conversation materials by the tablet 146 disposed as a manual input device. With these functions, during an interlocution, a data base retrieval, an information editing and processing operation, and the like may be accomplished. When an optical disk-in-card for personal uses is employed, the workstation may be customized for the pertinent person to easily operate the workstation.

Embodiment 4

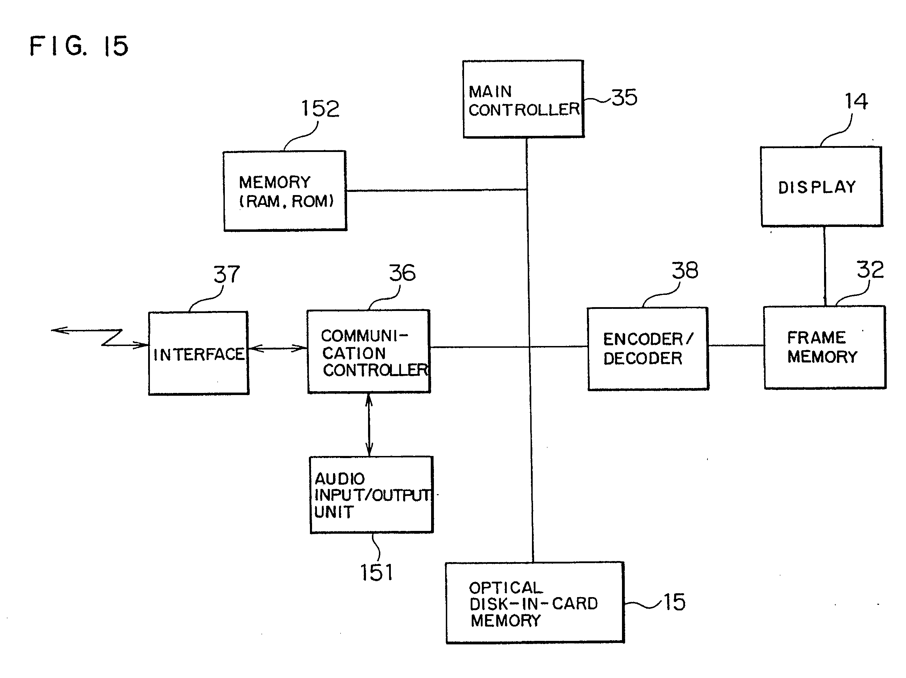

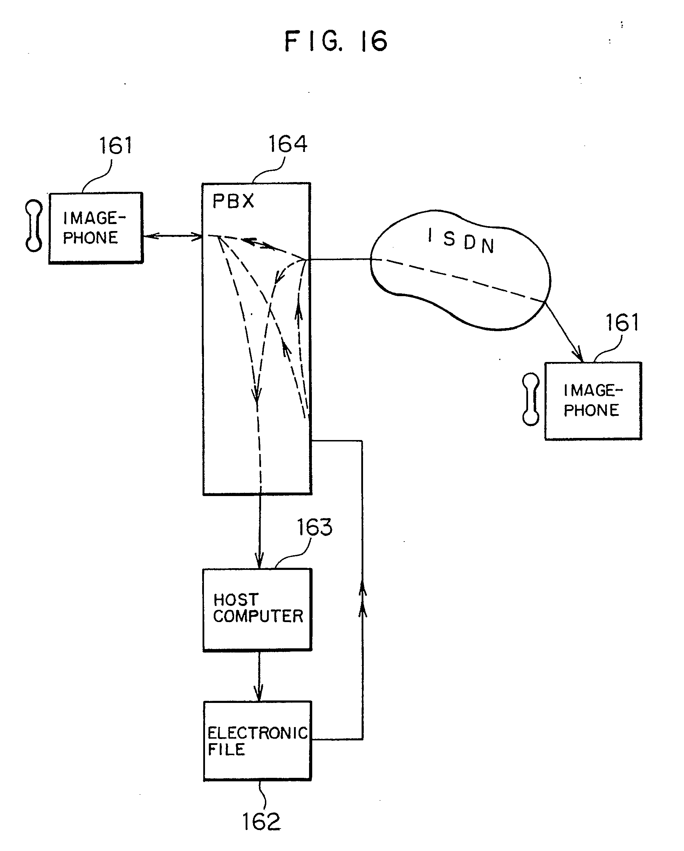

Figs. 15 and 16 respectively show the configuration of an image-phone apparatus having an interlocution function and a system employing the image-phones. The image-phone apparatus is implemented by disposing a voice input/output unit in the communication terminal of Fig. 3 to achieve a telephone conversion and a data communication at the same time.

In the constitution of Fig. 15, reference numerals 14, 15, and 35 to 38 designate the same components as those of Fig. 3. This constitution further comprises a voice input/output unit 151 and a memory 152 constituted with a random access memory (RAM) and a read-only memory (ROM).

In the system of Fig. 16, particularly, the image-phone 161 having an interlocution terminal is installed on a desk in place of a telephone for personal uses, namely, for achieving functions associated with an output terminal of an electronic file 162 and with a telephone set. In order to implement a paperless office, it is necessary that information is stored in the electronic file 162 such that when required, the information can be delivered therefrom to the apparatus on the desk via a host computer 163 and a digital private branch exchange (PBX) 164. Moreover, since the terminal includes the optical disk-in-card memory as a storage, a large amount of information acquired from the electronic file 162 can be stored in the terminal such that the data may be sent from the file 162 via the ISDN line to another image-phone 161.

Embodiment 5

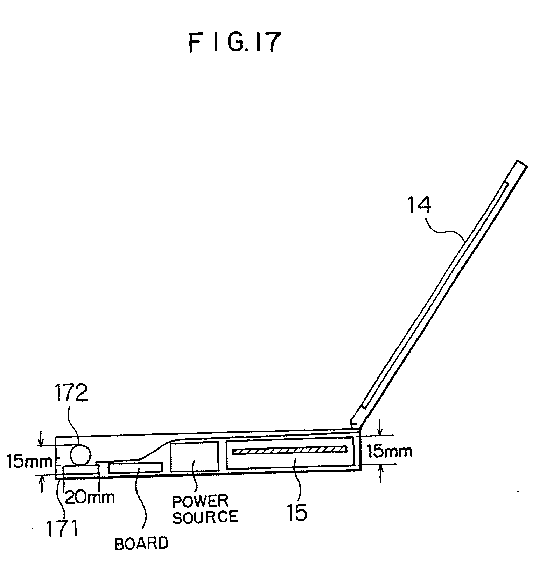

Fig. 17 shows a cross section of a paperless facsimile unit of a very thin type including an optical disk-in-card 15, a flat display 14, and an image sensor 171 of a complete contact type, which are combined in a very thin contour. Since the optical disk-in-card 15 is about 15 millimeters thick, the other constituent components are manufactured to be of a thickness not exceeding the thickness of the card 15 in this embodiment. The image sensor 171 is brought into contact with a sheet of an ordinal document and hence the total thickness of the sensor 171 and a platen roller 172 can be limited to 15 millimeters or less. With the thickness of the flat display 14 selected to be 15 millimeters or less, the paperless facsimile can be at most 35 millimeters thick. Moreover, since this apparatus includes the image sensor of the complete contact type, the width of the sensor may also be reduced to about 20 millimeters. Consequently, when compared with a CCD unit employing a reduction optical system, the paperless facsimile unit has a longer optical or light path, which leads to minimization of the depth and the thickness thereof.

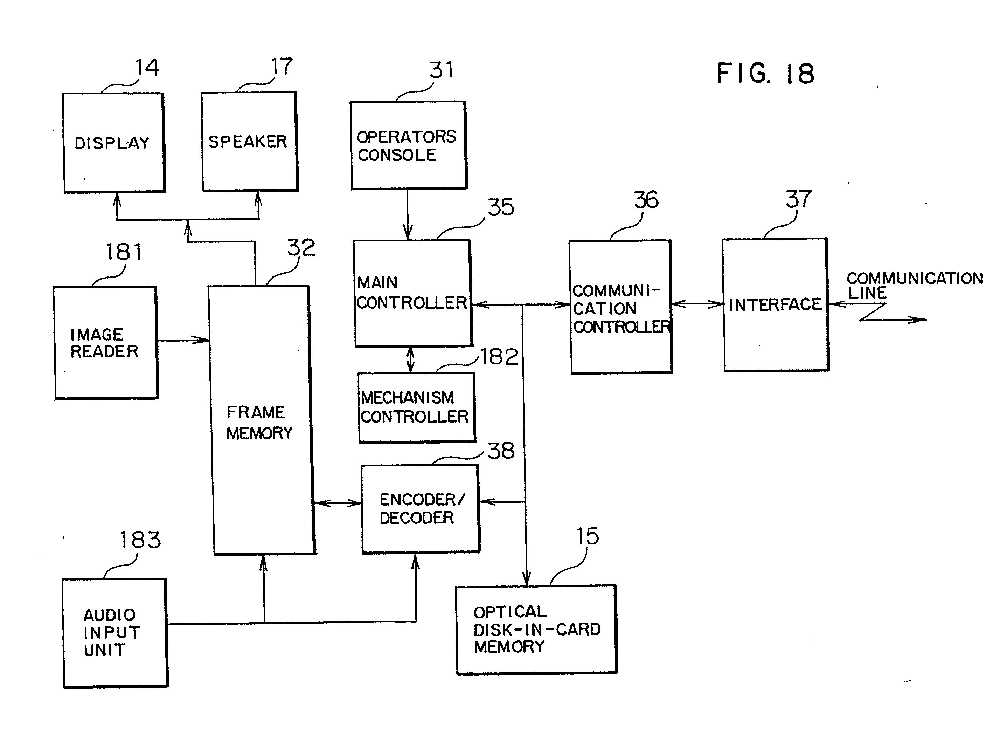

Fig. 18 is a block diagram showing the configuration of the paperless facsimile equipment of a very thin type. In this figure, reference numerals 14, 15, 17, 32, and 35 to 38 designate the same components as those of Fig. 3. In addition, the apparatus comprises an image scanner 181 as an image reader unit, a mechanism control unit 182, and a voice input/output unit 183. For a sensor of a scanner of this embodiment, a thin contact image sensor is favorably employed to read information.

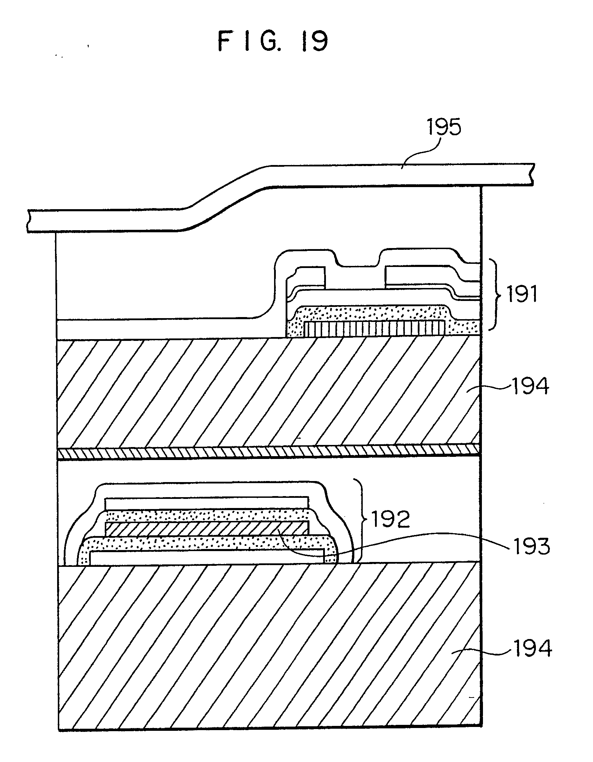

Fig. 19 shows a cross section of a contact image sensor having an integral light source. This contact-type reader sensor having a unified linear light source includes light receiving elements 191 linearly arranged on an optically transparent substrate 194 and electroluminescence (EL) elements 192 which are arranged in parallel with the light receiving elements 191 at a position below the light receiving elements 191 in this figure. An original document 194 is placed on a side over the light receiving elements 191.

Since electroluminescence elements are used to configure a light source, as compared with a case where LEDs are employed to form the light source, the fluctuation in the luminance of the light source is considerably minimized. When arranging the electroluminescence elements to be parallel to the light receiving elements, the intensity of illumination on surfaces of the light receiving elements and the gap therebetween can be reduced. In consequence, the thickness of the image sensor can be decreased. This is because a light emitting layer 193 of the electroluminescence elements 192 is formed in a linear contour to configure a linear light source or an area light source.

The gap between the light receiving elements and the light emitting elements need not be retained. In a case of an image sensor of a complete contact type, even when the light source is disposed in the vicinity of the light receiving elements, a uniform intensity of illumination is developed on a surface of the original document. As shown in Fig. 19, when at least two substrates 194 are adopted to integrally form the light receiving and emitting regions, the thickness of the image sensor may be reduced to be almost equal to the thickness of the substrates. The light emitting elements have a light emitting surface, which may be disposed on either one of a side of the substrate where the elements are formed and an opposite side thereof. When the light emitting surface is arranged on the opposite side, the configuration is as shown in Fig. 19. In contrast thereto, when the surface is disposed on the element side, the rearside surfaces respectively of the substrates may be fixed onto each other; alternatively, the sensor may be constructed such that a light may be once emitted from the light emitting elements, for example, to a downward direction so as to be reflected on a mirror.

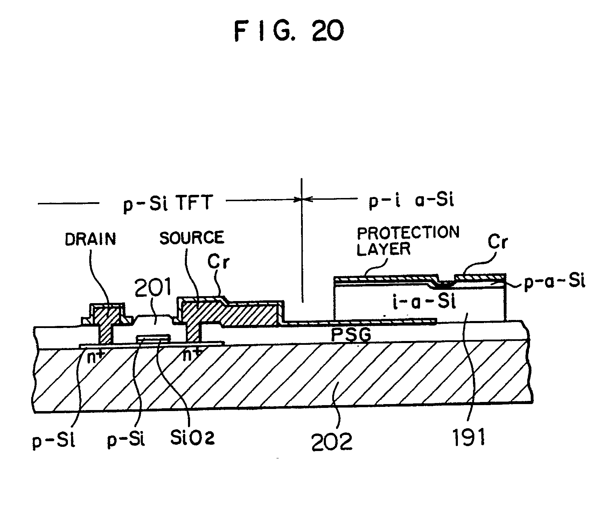

Fig. 20 shows a cross section of a contact image sensor including integrated scanner and reader circuits manufactured as follows. On a glass substrate 202 having a heat resistive temperature of 600°C or less, light receiving elements 191 and thin-film switching elements 201 are fabricated. An amorphous silicon (a-Si) developing a high optical sensitivity is desirably adopted for the light receiving elements 191; whereas, for the thin-film switching elements 201, the amorphous silicone or a polycrystalline silicon (p-Si) may be used. The image sensor is characterized by including a light receiving element section including photodiodes, photoconductors, or phototransistors arranged in a linear contour and a thin-film transistor (TFT) section including a scanner circuit comprising e.g. shift registers, level shifters, or multiplexers and/or a reader circuit section including impedance converter circuits, analog voltage converter circuits. According to the technology, the mounting operation for installing integrated circuit chips on a substrate is replaced with the fabrication of thin-film circuits and hence the width of the image sensor substrate can be reduced

EP 0 437 199 A2

to about one to two millimeters. Consequently, together with other additional circuits, the width of the image sensor of the complete contact type can be limited to 20 millimeters or less.

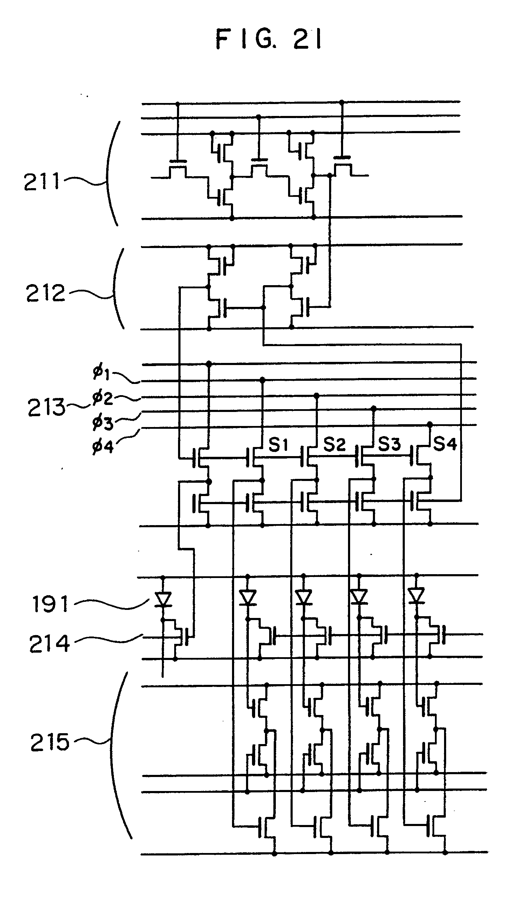

Fig. 21 shows an example of an equivalent circuit of the image sensor. In this configuration, the scanner circuit includes registers 211, level shifters 212, and multiplexers 213. The reader circuit comprises reset switches 214 and impedance converter circuits or analog voltage converter circuits 215. These circuits are formed in the form of TFT circuits using the amorphous or polychristalline silicon. The light receiving elements 191 are constituted with photodiodes or photoconductors formed with the amorphous silicon.

It is also possible to integrally manufacture the light receiving section and the light emitting section; furthermore, the scanner circuit and/or the reader circuit as well as the light receiving elements may be fabricated in an integrated fashion. This results in reduction of the width and the thickness of the image sensor.

In this connection, although the present invention relates to a communication terminal apparatus, the contact image sensor may be combined with an optical disk-in-card to implement an image reader system having a reduced thickness.

As many apparently widely different embodiments of the present invention can be made without departing from the spirit and scope thereof, it is to be understood that the invention is not limited to the specific embodiments thereof except as defined in the appended claims.

## Claims

1. A communication terminal apparatus comprising:
   an optical disk memory (15) for recording therein information; and
   communicate means (22; 37, 38) for transmitting as signal information the information stored in said optical disk memory.

2. A communication terminal apparatus according to Claim 1 wherein the information is stored in the form of digital signals in said optical disk memory.

3. A communication terminal apparatus according to Claim 1 wherein the information in said optical disk memory is prepared in advance.

4. A communication terminal apparatus according to Claim 1 wherein the signal information is directly transmitted in the form of digital signals.

5. A communication terminal apparatus according to Claim 1 wherein said optical disk memory is replaceable.

6. A communication terminal apparatus according to Claim 1 wherein said optical disk memory includes an optical recording medium (41, 62).

7. A communication terminal apparatus according to Claim 1 wherein information received by said communicate means is recorded as signal information in said optical disk memory.

8. A communication terminal apparatus according to Claim 1 wherein said optical disk memory is exchangeable.

9. A communication terminal apparatus comprising:
   communicate means (113, 114) for communicating information;
   a data base (15) for storing therein the information; and
   information processing means (14, 32, 38) for accessing said data base to process the information.

10. A communication terminal apparatus according to Claim 9 wherein the information is stored in an arranged form in said data base.

11. A communication terminal apparatus according to Claim 9 further including a radio communication unit (115).

12. A communication terminal apparatus according to Claim 9 wherein said information processing means includes a document generating and editing function.

13. A communication terminal apparatus comprising:
communicate means (36, 37) for communicating information; and
an area for storing therein information to be transmitted and an area for recording therein information received (15).

14. A communication terminal apparatus comprising:
communicate means (36, 37) for communicating information; and
an optical disk unit (15) including a transmission memory (41) for storing therein information to be transmitted and a reception memory (41) for recording therein information received.

15. A communication terminal apparatus according to Claim 14 wherein said optical disk including said reception memory has a directory (51) for storing therein key data associated with the received information.

16. A communication terminal apparatus comprising a memory (15, 41) wherein image information of a mobile picture is stored together with an audio signal in an identical track thereof, the audio signal being inserted into the image information for establishing a synchronization therebetween, thereby recording the mobile picture in said memory.

# F I G. 1

# F I G. 2

FIG. 3

14 DISPLAY

17 SPEAKER

31 OPERATORS CONSOLE

35 MAIN CONTROLLER

36 COMMUNICATION CONTROLLER

37 INTERFACE

COMMUNICATION LINE

32 FRAME MEMORY

38 ENCODER / DECODER

15 OPTICAL DISK-IN-CARD MEMORY

22

EP 0 437 199 A2

17

# FIG. 4

41   43   42

# FIG. 5

41

51 DIRECTORY

52 MAIN DATA

# FIG. 6

OPTICAL DISK-IN CARD MEMORY

61 — INFORMATION RECORDING / REPRODUCING UNIT

62 — OPTICAL DISK-IN-CARD

# F I G. 7

LIGHT PATH

# FIG. 8

# FIG. 9

F I G. 10

FIG. 11

HOST COMPUTER
117    116

RELAY STATION

RELAY STATION

RADIO COMMUNICATION UNIT — 115

INTERFACE — 114

COMMUNICATION CONTROLLER — 113

MAIN CONTROLLER
112

OPTICAL DISK-IN-CARD MEMORY — 15

111 MOBILE COMMUNICATION TERMINAL

ISDN INTERFACE — 114

COMMUNICATION CONTROLLER — 113

MAIN CONTROLLER
112

OPTICAL DISK-IN-CARD MEMORY — 15

119 COMMUNICATION TERMINAL

RADIO COMMUNICATION UNIT

INTERFACE

COMMUNICATION CONTROLLER

MAIN CONTROLLER

OPTICAL DISK-IN-CARD MEMORY

118 MOBILE COMMUNICATION TERMINAL

EP 0 437 199 A2

# F I G. 12

# F I G. 13

15

# FIG. 14

KEYBOARD ~144

MOUSE ~145

CPU ~141

MEMORY 1 ~ 4MB ~142

OPTICAL DISK-IN-CARD MEMORY (30 MB OR MORE) ~15

INTERFACE

ISDN BOARD ~143

TABLET ~146

DISPLAY ~149

IMAGE SCANNER ~147

TELEPHONE UNIT ~148

EP 0 437 199 A2

EP 0 437 199 A2

# FIG. 15

# FIG. 16

# F I G.17

172

14

15mm

20mm

171

BOARD

POWER
SOURCE

15

15mm

FIG. 18

# F I G. 19

195

191

194

192

193

194

# F I G. 20

# F I G. 2 I